# EUROPEAN PATENT APPLICATION

(11) **EP 3 144 118 A1**
(43) Date of publication of application: **22.03.2017**
(21) Application number: 14891751.1
(22) Date of filing: 03.12.2014
(51) Int. Cl.: B29C 45/17, B29C 49/42, B29C 43/32, F16H 1/22

(54) **POWER TIME SEQUENCE CONVERSION METHOD AND DEVICE FOR MANUFACTURING PRODUCTS IN BATCHES**

(30) Priority: 15.05.2014 CN 201410206689
(71) Applicant: South China University of Technology, Guangdong 510640 (CN); Guangzhou Huaxinke Enterprise Co., Ltd., Guangzhou, Guangdong 510663 (CN)
(72) Inventor: QU, Jinping, Guangzhou Guangdong 510640 (CN); ZHANG, Guizhen, Guangzhou Guangdong 510640 (CN); JIN, Gang, Guangzhou Guangdong 510640 (CN); YANG, Zhitao, Guangzhou Guangdong 510640 (CN)
(74) Representative: Peter, Julian
(86) International application number: PCT/CN2014/092956
(87) International publication number: WO 2015/172552

(57) **Abstract**

Disclosed are a power time sequence conversion method and device for manufacturing products in batches. A common power is sequentially coupled with power input ends of a plurality of execution mechanisms in different time periods, so as to provide in time order a plurality of power drives required during a batch manufacturing process of products, or provide power drives in different forms such as movements and forces to the same execution mechanism in a relaying manner in two adjacent time periods. A change gear capable of rotation and revolution is sequentially meshed with a plurality of tail end driving gears in different time periods, wherein the tail end driving gears are uniformly distributed in the circumferential direction and serve as power outputs, the revolution of the change gear is braked after each meshing to achieve the power drive of a certain execution mechanism in batch manufacturing of the products, and meanwhile, power drives in different forms such as movements and forces are provided to the same execution mechanism in a relaying manner through a torque converter. Compared with the conventional batch manufacturing of products where a plurality of independent power drives are required, the present invention has remarkable characteristics in low cost, low energy consumption, high reliability, good stability and the like.

## Description

### FIELD OF THE INVENTION

The present invention relates to the field of power transmission technology in the batch manufacturing process of products, especially a power time sequence conversion method and device for manufacturing products in batches.

### BACKGROUND OF THE INVENTION

Many industrial products and consumer goods, such as injection-molded products, container bottles and casts, are produced in batches. Manufacturing products in batches refers to repeatedly manufacturing products with the same structure and shape in a fixed cycle. In a fixed cycle, a plurality of power inputs are required in time order in the batch manufacturing process of products for different mechanisms (such as plastication metering, screw back-drawing, die opening-closing-locking, ejecting, and injection pressure retaining in the polymer injection molding process), or a mechanism needs power drives in different forms such as movements and forces (e.g., in the die closing-locking process, the first started die-closing process needs the movement input, and the next die-locking process needs the force input).

In the conventional batch manufacturing process of products, the power input of different mechanisms is usually completed by a hydraulic and mechanical crankshaft, which has such shortcomings as high cost, high energy consumption and large size. In recent years, an AC servomotor has been gradually used as the drive source in the batch manufacturing process of products, together with a ball screw, a toothed belt, a gear and other devices for inputting power, thus completing a plurality of specified actions required by the batch manufacturing process. In this form of the batch-manufacturing device, however, each action is usually individually driven by one or more servomotors. Therefore, the number of motors to be provided in the batch-manufacturing device increases with the number of actions to be performed by the device. For example, an ordinary all-electric injection molding machine generally needs at least five servomotors to complete the plastication metering, screw back-drawing, die opening-closing-locking, ejecting, injection pressure retaining and other specified actions. Besides, the key functional components (such as a ball screw) for the realization of linear movement generally need to be imported and are expensive. Moreover, with the demand for production of large products, a large all-electric injection molding machine needs to be developed, but at present it is still difficult to develop a large servomotor and a ball screw to fit the machine. Therefore, multiple motors are generally used for driving at the same time to complete a specified action. For example, Japan UBE Machinery Group produced the world's largest all-electric molding machine, which uses two motors for driving a toggle rod to be locked and three motors for driving injection. Using multiple motors for driving at the same time to complete one action has increased the equipment cost, energy consumption and equipment size on one hand, and will have a synchronization problem with the increase of the number of motors on the other hand (i.e., the consistency problem of the multiple motors for starting, running and stopping); if the synchronization problem cannot be better solved, the device will have low precision, which will also greatly affect the product quality.

In view of such problems as huge equipment structure, high cost, high energy consumption, and poor synchronization with the transmission method and equipment in the current batch manufacturing process, it is of great significance to develop a new power time sequence conversion device for manufacturing products in batches.

### CONTENTS OF THE INVENTION

For overcoming the defects of the prior art, a purpose of the present invention is to provide a power time sequence conversion method for manufacturing products in batches with low cost and low energy consumption.

The other purpose of the present invention is to provide a power time sequence conversion device for manufacturing products in batches that uses the above method.

The purposes of the present invention are achieved through the following technical solution:

The present invention provides a power time sequence conversion method for manufacturing products in batches, which allows a common power to be sequentially coupled with power input ends of a plurality of execution mechanisms in different time periods, so as to provide in time order a plurality of power drives required during a batch manufacturing process of products;
wherein the source of the common power is a total drive mechanism, and the power input ends of the plurality of execution mechanisms are the respective tail end driving gears of a branch drive mechanism.

The power time sequence conversion device for manufacturing products in batches that uses the above method comprises a total drive mechanism, a branch drive mechanism and a time-sequence conversion mechanism, the total drive mechanism comprising a total drive motor, a master transmission shaft and a master driving gear, the branch drive mechanism comprising a plurality of tail end driving gears, the time-sequence conversion mechanism comprising a conversion drive motor, a power-conversion transmission assembly, a tie rod, a slave driving gear, a slave transmission shaft and a change gear; the total drive motor is connected with the master driving gear through the master transmission shaft, the master driving gear is meshed with the slave driving gear, the conversion drive motor is connected with the tie rod through the power-conversion transmission assembly, the slave transmission shaft is mounted eccentrically on the tie rod, and the slave driving gear and the change gear are both mounted on the slave transmission shaft, wherein the slave driving gear is meshed with the master driving gear, and the change gears are sequentially meshed with the respective tail end driving gears according to the time-sequence conversion.

In order to achieve intermittent time-sequence conversion, the tie rod is further provided with a brake.

The power-conversion transmission assembly comprises a conversion transmission shaft, a first pulley, a transmission belt and a second pulley, the output end of the conversion drive motor being connected with the first pulley through the conversion drive shaft, the first pulley being connected with the second pulley through the transmission belt, the tie rod being connected with the second pulley. While in use, the conversion drive motor drives the first pulley to rotate through the conversion transmission shaft, the first pulley drives the second pulley to rotate through the transmission belt, the second pulley drives the tie rod to rotate, the slave transmission shaft rotates with the tie rod, and the change gear connected on the transmission shaft is rotated around the master drive shaft, thus allowing the change gear to be switched among the respective tail end driving gears.

The change gear is connected with the respective tail end driving gears in a way of time-sequence conversion, that is, according to a user's actual needs, the connection of the change gear with the respective tail end driving gears can be converted based on a preset order and time interval, so that the change gear outputs the power required by the corresponding mechanism.

The plurality of tail end driving gears are circumferentially distributed, with the change gear meshed with one of the tail end driving gears.

The present invention provides another power time sequence conversion method for manufacturing products in batches, which allows a common power to be sequentially coupled with power input ends of a plurality of execution mechanisms in different time periods, so as to provide in time order a plurality of power drives required during a batch manufacturing process of products, or provide power drives in different forms such as movements and forces to the same execution mechanism in a relaying manner in two adjacent time periods;
wherein the source of the common power is a total drive mechanism, and the power input ends of the plurality of execution mechanisms are the respective tail end driving gears of a branch drive mechanism.

The power time sequence conversion device for manufacturing products in batches that uses the above method comprises a total drive mechanism, a branch drive mechanism and a time-sequence conversion mechanism, the total drive mechanism comprising a total drive motor, a master transmission shaft and a master driving gear, the branch drive mechanism comprising a plurality of tail end driving gears, a clutch, a torque converter, and an output gear, the time-sequence conversion mechanism comprising a conversion drive motor, a power-conversion transmission assembly, a tie rod, a slave driving gear, a slave transmission shaft and a change gear; the total drive motor is connected with the master driving gear through the master transmission shaft, the master driving gear is meshed with the slave driving gear, the conversion drive motor is connected with the tie rod through the power-conversion transmission assembly, the slave transmission shaft is mounted eccentrically on the tie rod, and the slave driving gear and the change gear are both mounted on the slave transmission shaft, wherein the slave driving gear is meshed with the master driving gear, and the change gears are sequentially meshed with the respective tail end driving gears according to the time-sequence conversion; in the plurality of tail end driving gears, there are two tail end driving gears connected to the output gear through the torque converter, one connected to the torque converter through the clutch, the other connected directly to the torque converter.

The torque converter is provided inside with at least one pair of gear sets.

In order to achieve intermittent time-sequence conversion, the tie rod is further provided with a brake.

The power-conversion transmission assembly comprises a conversion transmission shaft, a first pulley, a transmission belt and a second pulley, the output end of the conversion drive motor being connected with the first pulley through the conversion drive shaft, the first pulley being connected with the second pulley through the transmission belt, the tie rod being connected with the second pulley. While in use, the conversion drive motor drives the first pulley to rotate through the conversion transmission shaft, the first pulley drives the second pulley to rotate through the transmission belt, the second pulley drives the tie rod to rotate, the slave transmission shaft rotates with the tie rod, and the change gear connected on the transmission shaft is rotated around the master drive shaft, thus allowing the change gear to be switched among the respective tail end driving gears.

The change gear is connected with the respective tail end driving gears in a way of time-sequence conversion, that is, according to the user's actual needs, the connection of the change gear with the respective tail end driving gears can be converted based on a preset order and time interval, so that the change gear outputs the power required by the corresponding mechanism.

The plurality of tail end driving gears are circumferentially distributed, with the change gear meshed with one of the tail end driving gears.

When this power time sequence conversion device is applied to an all-electric injection molding machine, there are nine tail end driving gears, which are respectively a plastication metering driving gear, a screw back-drawing driving gear, a die-opening driving gear, an ejecting driving gear, a die-closing driving gear, a die-locking driving gear, an injection-seat forward driving gear, an injection pressure retaining driving gear and an injection-seat backward driving gear. Wherein the plastication metering driving gear provides power for plastication metering of the materials, the screw back-drawing driving gear provides power for the back-drawing movement of the screw, the die-opening driving gear provides power for opening a die, the ejecting driving gear provides power for ejecting the screw, the die-closing driving gear provides power for closing a die, the die-locking driving gear provides power for a locking mechanism of a die, the injection-seat forward driving gear provides power for the forward movement of an injection seat, the injection pressure retaining driving gear provides power for retaining pressure of a die in the injection process, and the injection-seat backward driving gear provides power for the backward movement of an injection seat; wherein the die-closing driving gear and the die-locking driving gear are respectively connected with the torque converter, the die-closing driving gear provides movement for a die, and the die-locking driving gear provides a die-closing force for a die, thus power drives in different forms such as movements and forces being provided in a relaying manner in the die closing-locking process.

The principle of the power time sequence conversion device for manufacturing products in batches is as follows: Connected to the respective power mechanisms of the applied equipment (such as an all-electric injection molding machine) through the respective tail end driving gears, the time-sequence conversion mechanism drives the change gear to switch among the respective tail end driving gears, and drives the corresponding tail end driving gear to provide the power output for the execution mechanisms in time order, and then makes the same drive mechanism output a variety of different power in time order through the torque converter in the branch drive mechanism, thereby reducing the number of motors in the equipment.

The present invention has the following beneficial effects compared to the prior art:

The principle of the power time sequence conversion method and device for manufacturing products in batches is simple as follows: Driving the change gear to revolve to a specified location by converting the drive motor, and then driving the specified action by the total drive motor, thus cycling sequentially and executing each power output, making the same drive mechanism achieve a variety of power output, thereby reducing the number of motors in the equipment and effectively reducing equipment cost and energy consumption.

The power time sequence conversion device for manufacturing products in batches of the present invention is easy to operate and achieve control, and needs a small number of motors compared to the existing electric injection molding machine when applied to an all-electric injection molding machine, effectively reducing equipment cost and energy consumption, improving accuracy, overcoming the problem that a plurality of motor drives are difficult to be synchronized; the power time sequence conversion device for manufacturing products in batches of the present invention achieves the mechanical power-driven assembly of manufacturing products in batches by using a total drive motor to drive all the power output, thus reducing the floor space of the transmission device and equipment cost.

Besides, the power time sequence conversion device for manufacturing products in batches of the present invention can be applied to a wide range of applications including the injection molding machine, the bottle blowing machine or a molding press; it can adjust the number of the tail end driving gears according to the amount of the power type required by the equipment, providing flexibility and convenience for the application.

### BRIEF DESCRIPTION OF THE DRAWINGS

Fig. 1 is a schematic diagram of the principle of Example 1 of the power time sequence conversion device for manufacturing products in batches of the present invention.
Fig. 2 is a schematic sectional view taken along Line A-A in Fig. 1.
Fig. 3 is a schematic diagram of the principle of the branch drive mechanism in Example 2 of the power time sequence conversion device for manufacturing products in batches of the present invention.
Fig. 4 is a schematic diagram of the principle of Example 3 of the power time sequence conversion device for manufacturing products in batches of the present invention.

### DETAILED DESCRIPTION OF THE EMBODIMENTS

The present invention will be further described below in detail with reference to examples and drawings; however, the embodiments of the present invention are not limited thereto.

### Example 1

This example provides a power time sequence conversion method for manufacturing products in batches, which allows a common power to be sequentially coupled with power input ends of a plurality of execution mechanisms in different time periods, so as to provide in time order a plurality of power drives required during a batch manufacturing process of products;
wherein the source of the common power is a total drive mechanism, and the power input ends of the plurality of execution mechanisms are the respective tail end driving gears of a branch drive mechanism.

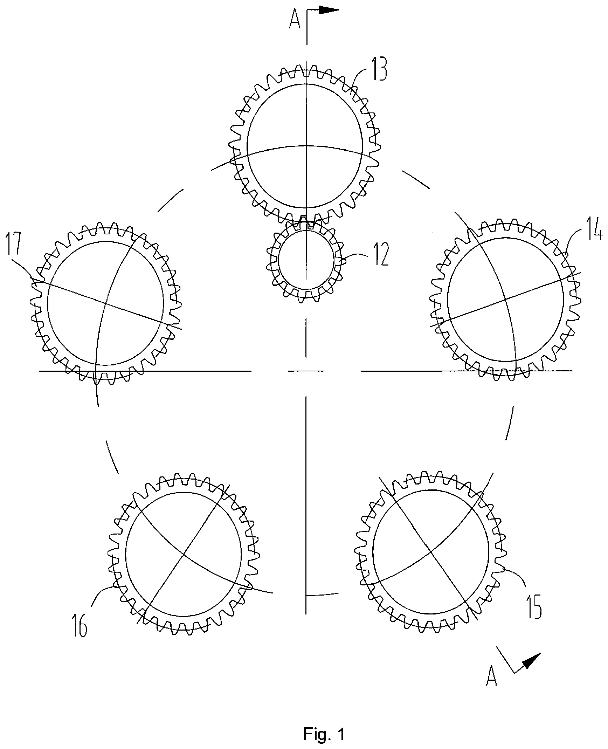

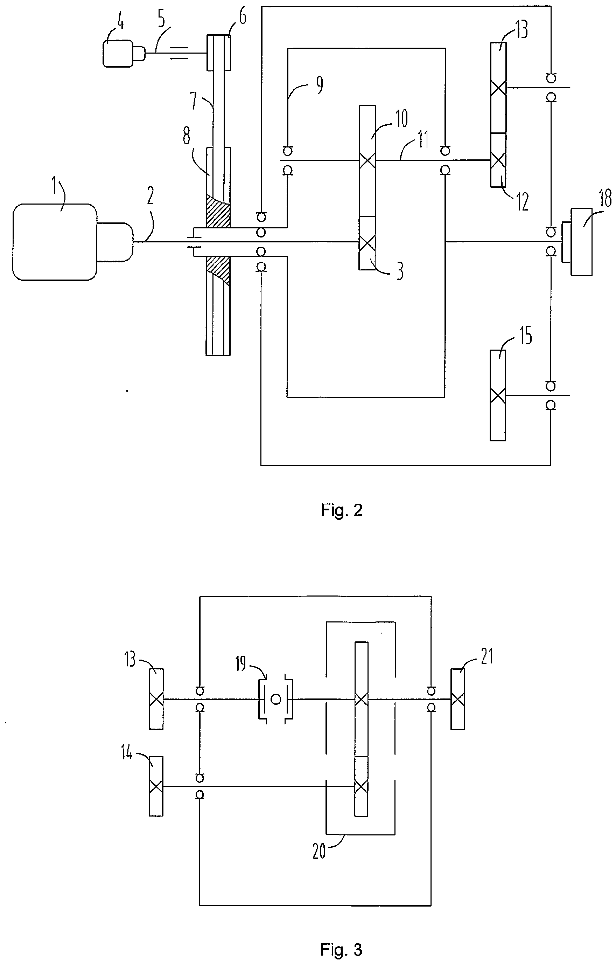

A power time sequence conversion device for manufacturing products in batches that uses the above method, as shown in Fig. 1 or 2, comprises a total drive mechanism, a branch drive mechanism and a time-sequence conversion mechanism, the total drive mechanism comprising a total drive motor 1, a master transmission shaft 2 and a master driving gear 3, the branch drive mechanism comprising a plurality of tail end driving gears (there are five driving gears in this example, namely the first tail end driving gear 13, the second tail end driving gear 14, the third tail end driving gear 15, the fourth tail end driving gear 16, and the fifth tail end driving gear 17), the time-sequence conversion mechanism comprising a conversion drive motor 4, a power-conversion transmission assembly, a tie rod 9, a slave driving gear 10, a slave transmission shaft 11 and a change gear 12; the total drive motor is connected with the master driving gear through the master transmission shaft, the master driving gear is meshed with the slave driving gear, the conversion drive motor is connected with the tie rod through a power-conversion transmission assembly, the slave transmission shaft is mounted eccentrically on the tie rod, and the slave driving gear and the change gear are both mounted on the slave transmission shaft, wherein the slave driving gear is meshed with the master driving gear, and the change gears are sequentially meshed with the respective tail end driving gears according to the time-sequence conversion.

In order to achieve intermittent time-sequence conversion, the tie rod 9 is further provided with a brake 18.

The power-conversion transmission assembly comprises a conversion transmission shaft 5, a first pulley 6, a transmission belt 7 and a second pulley 8, the output end of the conversion drive motor being connected with the first pulley through the conversion drive shaft, the first pulley being connected with the second pulley through the transmission belt, the tie rod being connected with the second pulley. While in use, the conversion drive motor drives the first pulley to rotate through the conversion transmission shaft, the first pulley drives the second pulley to rotate through the transmission belt, the second pulley drives the tie rod to rotate, the slave transmission shaft rotates with the tie rod, and the change gear connected on the transmission shaft is rotated around the master drive shaft, thus allowing the change gear to be switched among the respective tail end driving gears.

The change gear is connected with the respective tail end driving gears in a way of time-sequence conversion, that is, according to the user's actual needs, the connection of the change gear with the respective tail end driving gears can be converted based on a preset order and time interval, so that the change gear outputs the power required by the corresponding mechanism.

The plurality of tail end driving gears are circumferentially distributed, with the change gear meshed with one of the tail end driving gears.

The above power time sequence conversion device for manufacturing products in batches comprises the following steps in the specific process:
(1) Starting the conversion drive motor, and driving the slave driving gear to revolve along the master driving gear through the power-conversion drive assembly and the tie rod, thus driving the change gear to rotate to a preset position and to be meshed with the corresponding tail end driving gear;
(2) starting the brake, and braking the power-conversion drive assembly through the tie rod;
(3) starting the total drive motor, and driving the master driving gear to rotate through the master transmission shaft, thus driving the slave driving gear to rotate; the slave driving gear drives the change gear to rotate through the slave transmission shaft, thus making the corresponding tail end driving gear rotate and output power; and
(4) the brake releases braking, allowing repeating Steps (1) to (3) until the respective power output of the batch manufacturing process of products is completed.

Wherein the change gear may be connected with the respective tail end driving gears sequentially in the circumferential direction, and may also be connected with the corresponding driving gear in accordance with the time sequence of needing the different power.

### Example 2

This example provides a power time sequence conversion method for manufacturing products in batches, which allows a common power to be sequentially coupled with power input ends of a plurality of execution mechanisms in different time periods, so as to provide in time order a plurality of power drives required during a batch manufacturing process of products, or provide power drives in different forms such as movements and forces to the same execution mechanism in a relaying manner in two adjacent time periods;

Wherein the source of the common power is a total drive mechanism, and the power input ends of the plurality of execution mechanisms are the respective tail end driving gears of a branch drive mechanism.

A power time sequence conversion device for manufacturing products in batches that uses the above method, as shown in Fig. 1 or 2, comprises a total drive mechanism, a branch drive mechanism and a time-sequence conversion mechanism, the total drive mechanism comprising a total drive motor 1, a master transmission shaft 2 and a master driving gear 3, the branch drive mechanism comprising a plurality of tail end driving gears (there are five driving gears in this example, namely the first tail end driving gear 13, the second tail end driving gear 14, the third tail end driving gear 15, the fourth tail end driving gear 16, and the fifth tail end driving gear 17), a clutch 19, a torque converter 20 and an output gear 21, the time-sequence conversion mechanism comprising a conversion drive motor 4, a power-conversion transmission assembly, a tie rod 9, a slave driving gear 10, a slave transmission shaft 11 and a change gear 12; the total drive motor is connected with the master driving gear through the master transmission shaft, the master driving gear is meshed with the slave driving gear, the conversion drive motor is connected with the tie rod through a power-conversion transmission assembly, the slave transmission shaft is mounted eccentrically on the tie rod, and the slave driving gear and the change gear are both mounted on the slave transmission shaft, wherein the slave driving gear is meshed with the master driving gear, and the change gears are sequentially meshed with the respective tail end driving gears according to the time-sequence conversion; in the plurality of tail end driving gears, as shown in Fig. 3, there are two tail end driving gears (the first tail end driving gear 13 and the second tail end driving gear 14 in this example) that are simultaneously connected to the output gear through the torque converter, one connected to the torque converter through the clutch, the other connected directly to the torque converter.

The torque converter is provided inside with at least one pair of gear sets.

In order to achieve intermittent time-sequence conversion, the tie rod is further provided with a brake 18.

The power-conversion transmission assembly comprises a conversion transmission shaft 5, a first pulley 6, a transmission belt 7 and a second pulley 8, the output end of the conversion drive motor being connected with the first pulley through the conversion drive shaft, the first pulley being connected with the second pulley through the transmission belt, the tie rod being connected with the second pulley. While in use, the conversion drive motor drives the first pulley to rotate through the conversion transmission shaft, the first pulley drives the second pulley to rotate through the transmission belt, the second pulley drives the tie rod to rotate, the slave transmission shaft rotates with the tie rod, and the change gear connected on the transmission shaft is rotated around the master drive shaft, thus allowing the change gear to be switched among the respective tail end driving gears.

The change gear is connected with the respective tail end driving gears in a way of time-sequence conversion, that is, according to the user's actual needs, the connection of the change gear with the respective tail end driving gears can be converted based on a preset order and time interval, so that the change gear outputs the power required by the corresponding mechanism.

The plurality of tail end driving gears are circumferentially distributed, with the change gear meshed with one of the tail end driving gears.

The principle of the power time sequence conversion device for manufacturing products in batches is as follows: Connected to the respective power mechanisms of the applied equipment (such as an all-electric injection molding machine) through the respective tail end driving gears, the time-sequence conversion mechanism drives the change gear to switch among the respective tail end driving gears, and drives the corresponding tail end driving gear to provide the power output for the execution mechanisms in time order, and then makes the same drive mechanism output a variety of different power in time order through the torque converter in the branch drive mechanism, thereby reducing the number of motors in the equipment. The specific process comprises the following steps:
(1) Starting the conversion drive motor, and driving the slave driving gear to revolve along the master driving gear through the power-conversion drive assembly and the tie rod, thus driving the change gear to rotate to a preset position and to be meshed with the corresponding tail end driving gear;
(2) starting the brake, and braking the power-conversion drive assembly through the tie rod;
(3) starting the total drive motor, and driving the master driving gear to rotate through the master transmission shaft, thus driving the slave driving gear to rotate; the slave driving gear drives the change gear to rotate through the slave transmission shaft, thus making the corresponding tail end driving gear rotate and output power; and
(4) the brake releases braking, allowing repeating Steps (1) to (3) until the respective power output of the batch manufacturing process of products is completed.

Wherein the change gear may be connected with the respective tail end driving gears sequentially in the circumferential direction, and may also be connected with the corresponding driving gear in accordance with the time sequence of needing the different power; when the change gear is switched between the first tail end driving gear and the second tail end driving gear, output is finally done through the output gear 21, thus switching movement and force drives of the same execution mechanism.

### Example 3

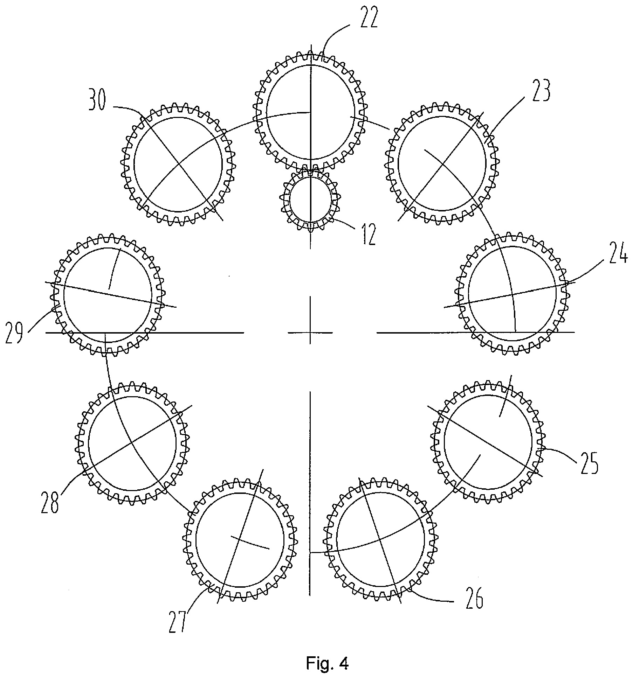

This example provides a power time sequence conversion device for manufacturing products in batches, which is used in an all-electric injection molding machine. This example is different from Example 2 in the following aspects: As shown in Fig. 4, there are nine tail end driving gears, which are respectively a plastication metering driving gear 22, a screw back-drawing driving gear 23, a die-opening driving gear 24, an ejecting driving gear 25, a die-closing driving gear 26, a die-locking driving gear 27, an injection-seat forward driving gear 28, an injection pressure retaining driving gear 29 and an injection-seat backward driving gear 30. Wherein the plastication metering driving gear provides power for plastication metering of the materials, the screw back-drawing driving gear provides power for the back-drawing movement of the screw, the die-opening driving gear provides power for opening a die, the ejecting driving gear provides power for ejecting the screw, the die-closing driving gear provides power for closing a die, the die-locking driving gear provides power for a locking mechanism of a die, the injection-seat forward driving gear provides power for the forward movement of an injection seat, the injection pressure retaining driving gear provides power for retaining pressure of a die in the injection process, and the injection-seat backward driving gear provides power for the backward movement of an injection seat; wherein the die-closing driving gear and the die-locking driving gear are respectively connected with the torque converter, the die-closing driving gear provides movement for a die, and the die-locking driving gear provides a die-closing force for a die, thus power drives in different forms such as movements and forces being provided in a relaying manner in the die closing-locking process.

The present invention can be well implemented as described above. The above examples are only the preferred examples of the present invention, and are not intended to limit the scope of the present invention; that is, variations and modifications consistent with the present invention are intended to be encompassed by the scope of the present invention as defined by the appended claims.

## Claims

1. A power time sequence conversion method for manufacturing products in batches, **characterized in that**: a common power is sequentially coupled with power input ends of a plurality of execution mechanisms in different time periods, so as to provide in time order a plurality of power drives required during a batch manufacturing process of products;
wherein the source of the common power is a total drive mechanism, and the power input ends of the plurality of execution mechanisms are respective tail end driving gears of a branch drive mechanism.

2. A power time sequence conversion device for manufacturing products in batches that uses the method according to claim 1, **characterized in that**: it comprises a total drive mechanism, a branch drive mechanism and a time-sequence conversion mechanism, the total drive mechanism comprising a total drive motor, a master transmission shaft and a master driving gear, the branch drive mechanism comprising a plurality of tail end driving gears, the time-sequence conversion mechanism comprising a conversion drive motor, a power-conversion transmission assembly, a tie rod, a slave driving gear, a slave transmission shaft and a change gear; the total drive motor is connected with the master driving gear through the master transmission shaft, the master driving gear is meshed with the slave driving gear, the conversion drive motor is connected with the tie rod through a power-conversion transmission assembly, the slave transmission shaft is mounted eccentrically on the tie rod, and the slave driving gear and the change gear are both mounted on the slave transmission shaft, wherein the slave driving gear is meshed with the master driving gear, and the change gears are sequentially meshed with the respective tail end driving gears according to the time-sequence conversion.

3. The power time sequence conversion device for manufacturing products in batches according to claim 2, **characterized in that**: the tie rod is further provided with a brake.

4. The power time sequence conversion device for manufacturing products in batches according to claim 2, **characterized in that**: the power-conversion transmission assembly comprises a conversion transmission shaft, a first pulley, a transmission belt and a second pulley, the output end of the conversion drive motor being connected with the first pulley through the conversion drive shaft, the first pulley being connected with the second pulley through the transmission belt, the tie rod being connected with the second pulley.

5. A power time sequence conversion method for manufacturing products in batches, **characterized in that**: it allows a common power to be sequentially coupled with power input ends of a plurality of execution mechanisms in different time periods, so as to provide in time order a plurality of power drives required during a batch manufacturing process of products, or provide power drives in different forms such as movements and forces to the same execution mechanism in a relaying manner in two adjacent time periods;
wherein the source of the common power is a total drive mechanism, and the power input ends of the plurality of execution mechanisms are respective tail end driving gears of a branch drive mechanism.

6. A power time sequence conversion device for manufacturing products in batches that uses the method according to claim 5, **characterized in that**: it comprises a total drive mechanism, a branch drive mechanism and a time-sequence conversion mechanism, the total drive mechanism comprising a total drive motor, a master transmission shaft and a master driving gear, the branch drive mechanism comprising a plurality of tail end driving gears, a clutch, a torque converter, and an output gear, the time-sequence conversion mechanism comprising a conversion drive motor, a power-conversion transmission assembly, a tie rod, a slave driving gear, a slave transmission shaft and a change gear; the total drive motor is connected with the master driving gear through the master transmission shaft, the master driving gear is meshed with the slave driving gear, the conversion drive motor is connected with the tie rod through a power-conversion transmission assembly, the slave transmission shaft is mounted eccentrically on the tie rod, and the slave driving gear and the change gear are both mounted on the slave transmission shaft, wherein the slave driving gear is meshed with the master driving gear, and the change gears are sequentially meshed with the respective tail end driving gears according to the time-sequence conversion; in the plurality of tail end driving gears, there are two tail end driving gears connected to the output gear through the torque converter, one connected to the torque converter through the clutch, the other connected directly to the torque converter.

7. The power time sequence conversion device for manufacturing products in batches according to claim 6, **characterized in that**: the torque converter is provided inside with at least one pair of gear sets; and the tie rod is further provided with a brake.

8. The power time sequence conversion device for manufacturing products in batches according to claim 6, **characterized in that**: the power-conversion transmission assembly comprises a conversion transmission shaft, a first pulley, a transmission belt and a second pulley, the output end of the conversion drive motor being connected with the first pulley through the conversion drive shaft, the first pulley being connected with the second pulley through the transmission belt, the tie rod being connected with the second pulley.

9. The power time sequence conversion device for manufacturing products in batches according to claim 6, **characterized in that**: the change gear is connected with the respective tail end driving gears in a way of time-sequence conversion, with the plurality of tail end driving gears circumferentially distributed.

10. The power time sequence conversion device for manufacturing products in batches according to claim 6, **characterized in that**: there are nine tail end driving gears, which are respectively a plastication metering driving gear, a screw back-drawing driving gear, a die-opening driving gear, an ejecting driving gear, a die-closing driving gear, a die-locking driving gear, an injection-seat forward driving gear, an injection pressure retaining driving gear and an injection-seat backward driving gear.
